# EUROPÄISCHE PATENTSCHRIFT

(11) **EP 1 095 253 B1**
(45) Veröffentlichungstag und Bekanntmachung des Hinweises auf die Patenterteilung: **03.05.2006**
(21) Anmeldenummer: 99947204.6
(22) Anmeldetag: 12.07.1999
(51) Int. Cl.: G01N 3/22

(54) **SENSORMEMBRAN ZUR BESTIMMUNG VON SAUERSTOFFKONZENTRATIONEN**
SENSOR MEMBRANE FOR DETERMINING OXYGEN CONCENTRATIONS AND METHOD FOR THE PRODUCTION THEREOF
MEMBRANE DE DETECTION POUR DETERMINER DES CONCENTRATIONS EN OXYGENE ET PROCEDE PERMETTANT DE LA PRODUIRE

(30) Priorität: 15.07.1998 DE 19831770
(43) Veröffentlichungstag der Anmeldung: 02.05.2001
(73) Patentinhaber: O2-Scan GmbH, 48149 Münster (DE)
(72) Erfinder: KATERKAMP, Andreas, D-48149 Münster (DE); HIEGEMANN, Maria, D-48324 Sendenhorst (DE); GEDIG, Erk, D-48153 Münster (DE)
(74) Vertreter: Pfenning, Meinig & Partner GbR
(86) Internationale Anmeldenummer: PCT/DE1999/002168
(87) Internationale Veröffentlichungsnummer: WO 2000/004367

(56) Entgegenhaltungen:
- EP-A- 0 585 212
- US-A- 4 705 545
- US-A- 5 414 117
- US-A- 5 580 527
- DATABASE CHEMABS [Online] CHEMICAL ABSTRACTS SERVICE, COLUMBUS, OHIO, US HASSAN, SAAD S. M. ET AL: "Miniaturized verapamil solid-state potentiometric sensors based on native ionic polymers" retrieved from STN Database accession no. 131:196583 XP002127582 & MIKROCHIM. ACTA (1999), 131(3-4), 199-203 ,

## Beschreibung

Die Erfindung betrifft eine Sensormembran nach dem Oberbegriff des Anspruchs 1 und ein Verfahren zu deren Herstellung.

So ist neben anderen beispielsweise in EP 0 585 212 A2 die Sensormembran eines optischen Sensors beschrieben, mit der O₂, H₂O₂, SO₂ oder halogenierte Kohlenwasserstoffe in einer Probe nachgewiesen werden können. Dabei ist in einer entsprechenden Polymermatrix eine Indikatorsubstanz eingebracht worden, die ihre optischen Eigenschaften durch die Anwesenheit der genannten Analyten verändert. So kann beispielsweise die bekannte Lumineszenzlöschung, also eine Änderung der Lumineszenzintensität, die durch Kontakt des hierfür geeigneten Analyten mit dem entsprechenden Indikator auftritt, ausgenutzt und dementsprechend die jeweilige Analytkonzentration gemessen werden. Es sind aber auch eine Veränderung der Lumineszenzabklingzeit bzw. die optische Absorption von Lichtwellen geeignete auswertbare Meßgrößen.

Aus dem Stand der Technik sind verschiedene Polymere bekannt, die zur Herstellung einer Sensormembran mehr oder weniger geeignet sind. An diese Polymere werden einige Grundvoraussetzungen gestellt. Dabei handelt es sich zumindest um ein gewisses Maß an Permeabilität für den jeweiligen Analyten, einer Möglichkeit den Indikator in die Polymermatrix einzubringen, ohne daß dieser seine Funktion verliert und Transparenz für die verwendeten Wellenlängenbereiche des Meßlichtes.

Bisher beschriebene Polymere zur Herstellung einer Sensormembran zur Bestimmung von z.B. Sauerstoff sind z.B. Cellulose, Polystyrole, Polytetrahydrofuran und deren Derivate (EP 0 585 212 A2), PVC (US 4,003,707) und PVC mit Weichmacher (US 4,752,115), teilfluorierte Polyurethane (WO 95 08 107, WO 93 18 391, US 5,453,248), Silicone in unterschiedlichen Modifikationen (US 4,003,707, US 5,0303,420, WO 95 22 759, WO 94 04 241, WO 96 37 768) in denen der Indikator gelöst vorliegen soll. Dagegen sind auch Polymere beschrieben, an denen der Indikator durch eine chemische Bindung gekoppelt wurde (US 5,580,527) oder aber der Indikator an einen Partikel z.B. aus Siliziumdioxid absorbiert wurde, der dann in eine Polymermatrix eingebracht wurde (US 4,003,707). Auch wurde eine Sensormembran auf Basis einer Keramik als Matrixmaterial beschrieben (US 5,490,490).

Die bisher verwendeten und beschriebenen Polymere weisen jedoch für viele Anwendungen zwingend erforderliche weitere Eigenschaften nicht auf. Dies trifft im wesentlichen auf ihre relativ geringe mechanische und thermische Stabilität zu, wobei zu beachten ist, daß für viele Anwendungen eine ein- bzw. mehrmalige Sterilisierung z.B. mit Dampf erforderlich sein kann. Die dabei auftretenden hohen Temperaturen führen aber bei den bekannten Materialien zu unerwünschten Änderungen ihrer physikalisch-chemischen und optischen Eigenschaften, so daß deren Eignung für solche Anwendungen nicht gegeben ist.

Ein weiterer Nachteil ergibt sich aus der schlechten Fixierung des sensitiven Indikators, z.B. der Übergangsmetallkomplexe, in den verwendeten Polymermatrices. In hydrophoben, relativ weichen gaspermeablen Silikonmembranen lösen sich besagte Komplexe schlecht, weshalb sie an Füllmaterialien adsorbiert werden müssen. Die heterogene Verteilung an zudem lichtstreuenden Partikeln bringt optische Nachteile mit sich. Aus polyanionischen Materialien werden die Übergangsmetallkomplexe relativ leicht herausgewaschen, da diese Ionenaustauscherverhalten zeigen und hydrophil sind. Letztere Materialien haben darüberhinaus den Nachteil, daß sie von der zumeist wäßrigen Probenlösung durchdrungen werden können, woraus sich eine schlechte Chemoselektivität, zu den in der wässrigen Probenlösung gelösten Substanzen zu den der Indikator eine Querempfindlichkeit zeigt, ergibt. Außerdem sind die analytindzierten Änderungen der Übergangsmetallkomplexe in ionischer Umgebung oft irreversibel, weshalb sich eine Verwendung in einem reversibel arbeitenden Sensor verbietet.

Eine alternative Lösung, wie sie in US 5,580,527 gezeigt ist, erfordert die Synthese spezieller polymerer Liganden und ist daher relativ aufwendig.

Daneben weisen die bisher verwendeten und beschriebenen Polymermembranen mit Indikator auch den entscheidenen Nachteil auf, daß infolge der Lichteinwirkung des Meßlichts und Umgebungslichts eine Licht induzierte Veränderung oder Zerstörung von Indikator und Polymer auftritt, so daß ein häufiger Austausch, zumindest jedoch ein relativ häufiges nachkalibrieren eines Sensors auf Basis solcher Sensormembranen erforderlich ist.

Es ist daher Aufgabe der Erfindung, eine Sensormembran, die einen geeigneten Indikator enthält, zur Verfügung zu stellen, in der der Übergangsmetallkomplex homogen und stabil so immobilisiert ist, daß sich seine Eigenschaften bei Analyteinwirkung reversibel ändern, die temperatur- und gleichzeitig formstabil ist, sowie einfach und flexibel hergestellt werden kann.

Erfindungsgemäß wird diese Aufgabe mit den Merkmalen des Patentanspruchs 1 gelöst. Vorteilhafte Ausgestaltungsformen und Weiterbildungen der Erfindung ergeben sich mit der Anwendung, der in den untergeordneten Ansprüchen genannten Merkmale.

Für die erfindungsgemäßen Sensormembranen werden für die Polymermatrix entweder ausschließlich Schwefelpolymere oder eine Mischung von diesen mit anderen Polymeren, z.B. Silicon oder PVC oder eine Mischung verwendet, wobei bevorzugt Polymere mit Schwefel in der Hauptkette verwendet werden.

Vorteilhaft kann eine Polymermatrix verwendet werden, die überwiegend aus Polymere mit Schwefel in der Hauptkette besteht und der Schwefel in Form des Sulfids oder Sulfons in der Hauptkette des Polymers eingebaut ist. Es können auch Polymere auf der Basis von Diphenylsulfid und/oder Diphenylsulfon oder auch deren Derivate verwendet werden. Im Unterschied zu bisher beschriebenen Lösungswegen, werden in den erfindungsgemäßen Sensormembranen polymere Sulfid- und/oder Sulfonfunktionalitäten erstmalig gezielt zu Immobilisierung der analytsensitiven Übergangsmetallkomplexe eingesetzt. Wegen ihrer hohen Lewis-Baiszität treten die ungeladenen Sulfid- und/oder Sulfongruppen sowie zum Teil die aromatischen π Elektronen der Phenylsubstituenten mit den kationischen Übergangsmetallkomplexen in Wechselwirkung. Dies führt dazu, daß sich die besagten Komplexe homogen in der Polymermembran verteilen lassen und dort gegen Auswaschen stabilisiert sind. Auf der anderen Seite ist die attraktive Wechselwirkung aber immer noch so klein, daß der sauerstoffinduzierte Übergang der Komplexe vom gequenchten in den ungequenchten Zustand und umgekehrt, voll reversibel ist. Die erfindungsgemäß verwendbaren Polymere erhöhen darüber hinaus wegen ihrer Hydrophobizität die Chemoselektivität der sauerstoffsensitiven Membranen erheblich, da sie selektiv nur für hydrophobe Stoffe - in der Praxis also insbesondere Gase - permeabel sind.

Die erwünschte Kombination von Übergangsmetallkomplex-solubilisierenden Eigenschaften und einem hinreichend hydrophoben Charakter wurde aber bislang nur von bestimmten Cellulosederivaten, Polystyrol und Polytetrahydrofuran erfüllt (EP 0 585 212). Außer einer immer noch zu hohen Anfälligkeit gegen Auswaschen der Übergangsmetallkomplexe haben diese jedoch die Nachteile einer schlechten thermischen sowie mechanischen Stabilität. In entsprechenden Versuchen zeigt sich, daß die erfindungsgemäß verwendbaren Polymere für sensorische Anwendungen unter praxisnahen Bedingungen wesentlich besser geeignet sind, daß sie wesentlich härter und formstabiler sind, eine geringe Wasseraufnahme und trotzdem eine gute Sauerstoffpermeabilität zeigen. Im Dauerbetrieb können diese ohne weiteres Temperaturen bis zu 160 °C widerstehen, so daß eine Heißdampfsterilisation ohne weiteres schadlos überstanden werden kann und die optischen und mechanischen Eigenschaften erhalten bleiben.

Ein weiterer Vorteil der erfindungsgemäß verwendbaren Polymere besteht darin, daß sie sich nur in sehr wenigen organischen Lösungsmitteln lösen lassen, wobei auch solche darunter fallen, die auch geeignete Indikatoren lösen können.

Die bisher genannten vorteilhaften Eigenschaften führen dazu, daß eine solche Sensormembran für die verschiedensten Applikationen im Bereich der Medizin-und Biotechnik möglich ist.

Die erfindungsgemäße Sensormembran wird auch nach mehrfacher kostengünstiger Dampfsterilisation (Autoklavieren) weder spröde noch rissig, sie behält ihre Flexibilität und ihre Haftung auf einem gegebenenfalls verwendeten Träger wird ebenfalls nicht beeinträchtigt.

Wegen der hohen mechanischen Stabilität der erfindungsgemäß zu verwendenden Polymere ist es auch nicht mehr zwingend erforderlich, einen geeigneten Träger für eine solche Membran zu verwenden. Damit ergeben sich ganz neue Möglichkeiten der Anwendung oder der weiteren Verarbeitung. So ist eine Sensormembran ohne Träger sehr dünn und flexibel und kann, z.B. mit einem Haftvermittler versehen, an verschiedene Meßorte angebracht werden. Dieses ist besonders vorteilhaft bei Meßorten, an dem die Membran nicht durch Auftragetechniken, wie z.B. Tauchbeschichten, Bedrucken, Auftropfen, Aufsprühen oder ähnlichem aufgebracht werden kann.

Die bisher genannten vorteilhaften Eigenschaften der erfindungsgemäß zu verwendenen Polymere führen aber weiter auch dazu, daß bei höheren Temperaturen, der in der Polymermatrix eingeschlossene Indikator keine höhere Mobilität erhält, wie z.B. bei Polymeren, deren Schmelzpunkt kleiner ist als der der erfindungsgemäß zu verwendenen Polymere, und demzufolge keine Agglomerate oder Cluster des Indikators gebildet werden. Eine mögliche Agglomeration oder Clusterung des Indikators verschlechtert die Meßempfindlichkeit des Indikators erheblich, bis hin zum Versagen der Sensormembran. Die erfindungsgemäße Sensormembran unterscheidet sich daher deutlich in diesem Punkt von den bisher bekannten Lösungen.

Durch die den erfindungsgemäß zu verwendenen Polymeren eigene Härte ist die erfindungsgemäße Sensormembran auch relativ unempfindlich gegen mechanische Belastungen, die von außen einwirken können, z.B. Personenkontakt oder Kontakt mit harten Oberflächen beim Einbau oder der Anwendung der Sensormembranen.

Wie bereits erwähnt, lassen sich die erfindungsgemäß zu verwendenen Polymere in nur wenigen organischen Lösungsmitteln lösen und sie sind im allgemeinen sehr resistent gegen übliche Chemikalien, z.B. Laugen und Säuren, so daß auch dadurch die möglichen Anwendungen vielfältiger sind, als dies für andere bisher verwendete Polymere der Fall ist. Geeignete Lösungsmittel für die erfindungsgemäß zu verwendenen Polymere sind z.B. ein- oder mehrfach chlorierte organische Lösungsmittel, wobei eines der bekanntesten Dichlormethan ist.

Als Indikator für z.B. Sauerstoff sind, insbesondere die bekannten Ru(II)-Komplexe geeignet, wobei insbesondere Ru-(II)-tris-(4,7-diphenyl-1,10-phenantrolin)-dichlorid geeignet ist, der sich ebenfalls sehr gut in ein- oder mehrfach chlorierten Lösungsmitteln lösen läßt.

Eine erfindungsgemäße Sensormembran für Sauerstoff kann daher z.B. ohne weiteres durch Lösen des Indikators Ru-(II)-tris-(4.7-diphenyl-1.10-phenantrolin)-dichlorid und einem erfindungsgemäß zu verwendenen Polymer, wie z.B. Polysulfon in Dichlormethan hergestellt werden. Im weiteren wird dann diese Lösung aus Lösungsmittel, Indikator und Polymer durch Auftropfen, Aufsprühen, Tauchbeschichten, Dispensieren, Bedrucken, Spin-Coating oder ähnlichem in Form eines dünnen flüssigen Films auf einem Träger aufgebracht. Durch Abdampfen des Lösungsmittels, z.B. bei Raumtemperatur, entsteht eine dünne Polymermembran mit in sich gelöstem Indikator. Das Abdampfen des Lösungsmittels kann aber auch bei höheren Temperaturen bis hin zum Schmelzpunkt der Polymere erfolgen. Als sehr günstig hat sich auch erwiesen, das Abdampfen eines Lösungsmittels, wie z.B. Dichlormethan, in einer Gasumgebung durchzuführen, in der schon Dichlormethan gasförmig vorliegt. Dadurch erfolgt ein langsames Abdampfen, wodurch eine sehr homogene und transparente Polymermembran entsteht. Eine solche Sensormembran kann dann zusammen mit dem Trägermaterial zur Messung von Sauerstoffkonzentrationen eingesetzt werden. Als Trägermaterial kann das Ende eines Lichtwellenleiters verwendet werden, es sind aber auch ein dünner transparenter Polymerfilm aus, z.B. Polycarbonat, Polyacrylat oder PMMA oder Glasplättchen als Trägermaterial möglich.

Grundsätzlich kann die Sensormembran aber auch ohne Träger verwendet werden, was aufgrund der hohen mechanischen Stabilität der erfindungsgemäß zu verwendenen Polymere möglich ist. So kann z.B. die Sensormembran im weiteren vom Träger gelöst und mit einem Klebefilm beschichtet werden. Als geeigneter Klebefilm hat sich ein dünner und transparenter Polyacrylat-Klebefilm der Firma 3M Type 467MP Hi-Performance bewährt. Damit läßt sich die Sensormembran durch einfaches Kleben an Meßorten befestigen, die mit den genannten Beschichtungsmethoden nicht zugänglich sind.

Eine weitere sauerstoffpermeable Schicht auf der beschriebenen Sensormembran, auf der der Kontaktseite zwischen Träger und Sensormembran gegenüberliegenden Seite der Sensormembran, verbessert die meßtechnischen Eigenschaften der Sensormembran. Wird das Meßlicht durch den Träger hindurch zur Sensormembran geführt, so kann auch Umgebungslicht über die Sensormembran durch den Träger hindurch zum optischen Meßsystem gelangen, wodurch der Meßprozeß beeinflußt wird. Eine für Umgebungslicht nicht transparente aber sauerstoffpermeable Schicht auf der Sensormembran verhindert dieses, gleichzeitig wäre die Umgebung des Meßortes vor dem Meßlicht und/oder Lumineszenzlicht geschützt, was in einigen medizinischen oder biotechnischen Anwendungen sehr wichtig ist.

Überraschend hat sich gezeigt, daß in allen Sensormembranen, die auf Basis der erfindungsgemäß zu verwendenen Polymeren nach dem beschriebenen Verfahren hergestellt werden, Indikatoren auf Basis der Ru(II)-Komplexen homogen verteilt in der Sensormembran vorliegen. Es wurden keine Agglomerate oder Cluster von Ru (II)-Komplexen gefunden. Auch nach einer mehrfachen Dampfsterilisation der Sensormembranen wurde keine Agglomerate oder Cluster ermittelt. Weiterhin zeigte sich auch überraschend, daß sich die optischen und sensorischen Eigenschaften der Ru(II)-Komplexe durch eine mehrfache Dampfsterilisation in keiner Weise verändern. Dieses ist ein unerwartetes Ergebnis, da bei den bisher bekannten Sensormembranen eine Veränderung der optischen und sensorischen Eigenschaften nach einer Dampfsterilisation gemessen wurde.

Vergleichende Versuche haben auch ergeben, daß die so hergestellten erfindungsgemäßen Sensormembranen ein wesentlich geringeres Auswaschverhalten des immobilisierten Indikators aufweisen.

Die Langzeitstabilität der erfindungsgemäßen Sensormembranen kann beträchtlich erhöht werden, indem der Polymermatrix zusätzlich Radikalfänger oder auch Lichtschutzstabilisatoren zugegeben werden, die eine Zerstörung des Polymers und des Indikators, infolge von Lichteinwirkung ver- bzw. zumindest behindern, so daß eine Verwendung der Sensormembranen über einen größeren Zeitraum gegenüber den bisher bekannten Lösungen erreicht werden kann. Durch die Zugabe der Radikalfänger oder auch Lichtschutzstabilisatoren wird dem bekannten Phänomen, das infolge von Lichteinwirkung, wenn auch nur geringe Mengen an Radikalen und Hydroperoxiden erzeugt werden, das Polymer und der Indikator angegriffen und chemisch umgesetzt werden, entgegen gewirkt. Als geeignete Radikalfänger oder auch Lichtschutzstabilisatoren haben sich solche, die ausgewählt sind, aus der Gruppe der sterisch gehinderten Amine (eng. HALS = Hindered Amine Light Stabilizer) herausgestellt, die nicht wie übliche Lichtschutzmittel auf Absorption des eingestrahlten Lichts oder auf Quenschen des absorbierten Lichtes beruhen, sondern im wesentlichen auf der Fähigkeit Radikale und Hydroperoxide, die beim Photoabbau von Polymeren gebildet werden, abzufangen bzw. zu ersetzen. Dadurch wird einerseits ein weiterer Abbau der Polymere verhindert und damit eine Stabilisierung der Mikroumgebung des Indikators erzielt und gleichzeitig der Indikator vor einem chemischen Angriff durch Radikale und Hydroperoxide geschützt. Zusätzlich wird Singulett-Sauerstoff durch Radikalfänger oder auch Lichtschutzstabilisatoren auf der Basis von sterisch gehinderten Aminen gequencht. Singulett-Sauerstoff führt bekanntlich zu einer Vergiftung einer Sensormembran zum Nachweis von Sauerstoff auf Basis von Ru(II)-Komplexen. Daher eignen sich solche Radikalfänger oder auch Lichtschutzstabilisatoren besonders zur Langzeitstabilisierung von Sauerstoff-Sensormembranen.

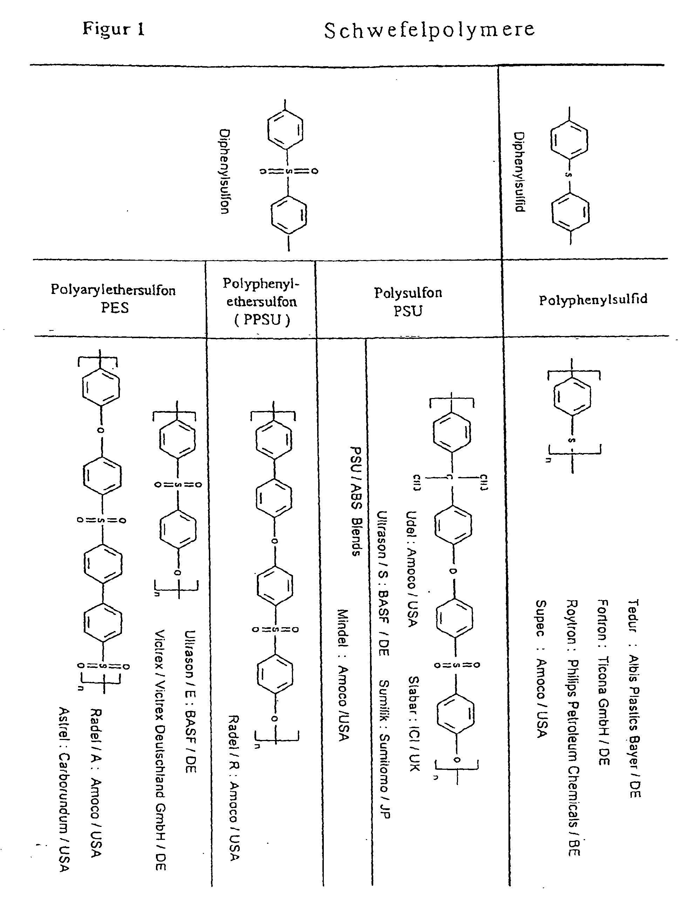

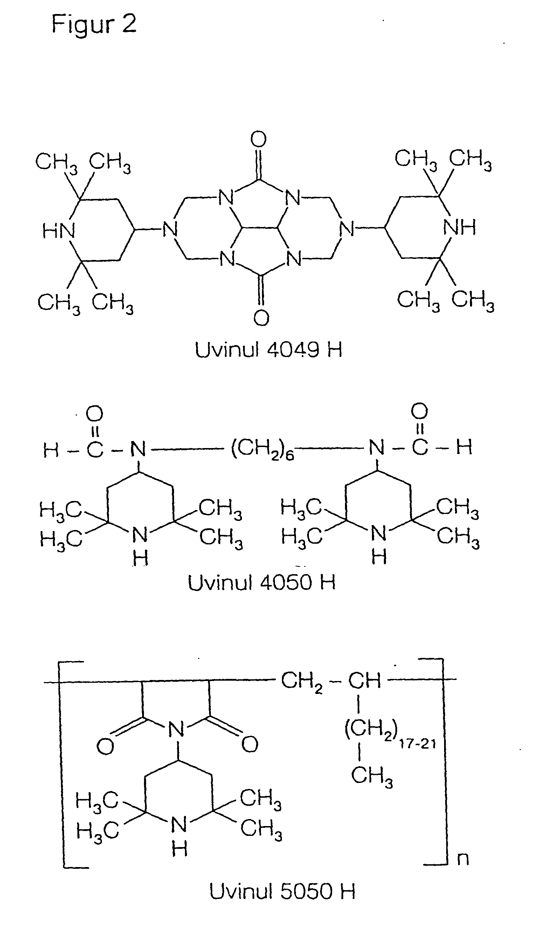

Eine detaillierte Beschreibung von Radikalfänger oder auch Lichtschutzstabilisatoren auf Basis von sterisch gehinderten Aminen ist in "R. Gächter, H. Muller, Plastics Additives Handbook, Carl Hanser Verlag München, Wien, 1989" gegeben. Als eine geeignete HALS Verbindung hat sich das Produkt Uvinul 4050 H der Firma Bayer herausgestellt, das der gelösten Polymer-/Übergangsmetallkomplexmischung zugegeben und mit 0,1 bis 0,5 % Gewichtsanteil vom Polymer eingesetzt werden kann. In Figur 2 sind einige HALS-Verbinder, wie z.B. auch Uvinul 4050 H dargestellt. Die Verbindung Uvinul 4050 H löst sich sehr gut in Dichlormethan und kann der schon beschriebenen Lösung aus Dichlormethan, Ru(II)tris(4,7 diphenyl 1,10 phenantrolin)dichlord und Polysulfon untergemischt werden. Die weitere Verarbeitung der Sensormembran kann dann, wie beschrieben, erfolgen.

Nachfolgend soll die Erfindung am Beispiel einer sauerstoffsensitiven Sensormembran näher erläutert werden.

Es wird eine Stammlösung Nr. 1 aus 10 ml Dichlormethan und 5,036 mg Ru(II)tris(4,7 diphenyl 1,10 phenantrolin)dichlord hergestellt. Es wird weiterhin eine Stammlösung Nr. 2 aus 2.514 g Polysulfon mit einer mittleren Molmasse von 27.000 und 30 ml Dichlormethan hergestellt. Die Stammlösung Nr. 2 wird 24 Stunden bei Raumtemperatur gerührt. Durch Mischen von 5 ml der Stammlösung Nr. 1 und 15 ml der Stammlösung Nr. 2 wird die Sensormembranstammlösung hergestellt. Zur Verbesserung der Langzeitstabilität der Sensormembran wird der Sensormembranstammlösung 7.542 mg der HALS-Verbindung Uvinul 4050 H zugesetzt.

Durch Auftropfen von 40 µl der Sensormembranstammlösung auf ein Glasplättchen und sofortiges Abdecken des Glasplättchen mit einer Petrischale wird eine Sensormembran hergestellt. Nach 20 Minuten wird die Petrischale entfernt und das Glasplättchen mit Membran für 2 Stunden bei 80 °C getempert. Die Membran kann anschließend vom Glasplättchen gelöst werden und durch Kleben an verschiedene Meßorte appliziert werden.

Zur Beschichtung der Stirnfläche eines Lichtwellenleiters aus Glas wird die beschriebene Sensormembranlösung verwendet. Durch Eintauchen der Stirnfläche des Lichtwellenleites in diese Lösung und langsames Abdampfen des Lösungsmittels, wobei dazu die Stirnfläche ca. 2 bis 3 mm für ca. 1 Minute über der Sensormembranstammlösung gehalten werden sollte, entsteht eine gut haftende Sensormembran auf der Stirnfläche des Lichtwellenleiters.

## Patentansprüche

1. Sensormembran zur Bestimmung von Sauerstoffkonzentrationen, bei der in einer für Sauerstoff permeablen Polymermatrix ein Indikator enthalten ist, dessen optische und physikalisch-chemische Eigenschaften durch Sauerstoff beeinflußbar sind,
**dadurch gekennzeichnet ,**
**daß** die Polymermatrix überwiegend aus Schwefelpolymeren gebildet ist, bei denen der Schwefel in Form des Sulfids oder Sulfons in der Hauptkette des Polymers eingebaut ist.

2. Sensormembran nach Anspruch 1,
**dadurch gekennzeichnet, daß** die Polymermatrix überwiegend aus einem Polymer, bei dem Diphenylsulfid und/oder Diphenylsulfon oder deren Derivate in der Hauptkette des Polymers eingebaut sind, verwendet werden.

3. Sensormembran nach Anspruch 1 oder 2,
**dadurch gekennzeichnet, daß** die Polymermatrix zusätzlich mindestens einen chemischen Radikalfänger und/oder Lichtschutzstabilisator enthält.

4. Sensormembran nach Anspruch 3,
**dadurch gekennzeichnet, daß** der/die Radikalfänger und/oder Lichtschutzstabilisator als funktionelle Gruppe sterisch gehinderte Amine aufweist/aufweisen.

5. Sensormembran nach einem der Ansprüche 1 bis 4,
**dadurch gekennzeichnet, daß** der Indikator ein sauerstoffsensitiver Ru, Os, Ir, Rh, Pd, Pt oder Re-Übergangsmetallkomplex ist.

6. Sensormembran nach einem der Ansprüche 1 bis 5,
**dadurch gekennzeichnet, daß** der sauerstoffsensitive Indikator Ru-(II)-tris-(4,7-diphenyl-1,10-phenantrolin)-dichlorid ist.

7. Sensormembran nach einem der Ansprüche 1 bis 6,
**dadurch gekennzeichnet, daß** die Sensormembran auf einem Träger aufgebracht ist.

8. Sensormembran nach Anspruch 7,
**dadurch gekennzeichnet, daß** sich auf dem Träger eine Haftvermittlerschicht befindet.

9. Sensormembran nach einem der Ansprüche 7 bis 8,
**dadurch gekennzeichnet, daß** der Träger ein Klebefilm ist.

10. Sensormembran nach einem der Ansprüche 7 bis 9,
**dadurch gekennzeichnet, daß** die Sensormembran vom Träger gelöst, ohne Träger verwendbar ist.

11. Sensormembran nach Anspruch 10,
**dadurch gekennzeichnet, daß** die Sensormembran ohne Träger mit einem Klebefilm beschichtet ist.

12. Sensormembran nach einem der Ansprüche 1 bis 11,
**dadurch gekennzeichnet, daß** auf einer Seite der Sensormembran eine sauerstoffpermeable Schicht aufgebracht ist.

13. Sensormembran nach Anspruch 12,
**dadurch gekennzeichnet, daß** die sauerstoffpermeable Schicht aus einem für das Meß- und/oder Lumineszenzlicht optisch nicht transparenten Material besteht.

14. Verfahren zur Herstellung einer Sensormembran nach einem der Ansprüche 1 bis 13,
**dadurch** gekenzeichnet,
daß die überwiegend aus Schwefelpolymeren gebildete Polymermatrix, bei der der Schwefel in Form des Sulfids oder Sulfons in der Hauptkette eingebaut ist, und der Indikator in einem Lösungsmittel gelöst werden und diese Lösung auf einem Träger aufgebracht und anschließend das Lösungsmittel entfernt wird.

15. Verfahren nach Anspruch 14,
**dadurch gekennzeichnet, daß** der aus Polymermatrix, Indikator und Lösungsmittel hergestellten Lösung zusätzlich chemische Radikalfänger und/oder Lichtschutzstabilisatoren zugegeben werden.

16. Verfahren nach Anspruch 14 oder 15,
**dadurch gekennzeichnet, daß** die Lösung aus Polymermatrix und Indikator durch Auftropfen, Aufsprühen, Tauchbeschichten, Dispensieren, Spin-Coating oder Bedrucken auf den Träger aufgebracht wird.

17. Verwendung einer Sensormembran nach einem der Ansprüche 1 bis 16 zur Bestimmung der Sauerstoffkonzentration in flüssigen und gasförmigen Medien.

## Claims

1. Sensor membrane for determining oxygen concentrations, in which, in a polymer matrix permeable to oxygen, an indicator is present whose optical and physicochemical properties can be influenced by oxygen, **characterized in that** the polymer matrix is formed primarily from sulphur polymers in which the sulphur is incorporated in the main chain of the polymer in the form of sulphide or sulphone.

2. Sensor membrane according to Claim 1, **characterized in that** the polymer matrix consists primarily of a polymer in which diphenyl sulphide and/or diphenyl sulphone or derivatives thereof are incorporated in the main chain of the polymer.

3. Sensor membrane according to Claim 1 or 2, **characterized in that** the polymer matrix additionally contains at least one chemical free-radical scavenger and/or light protection stabilizer.

4. Sensor membrane according to Claim 3, **characterized in that** the free-radical scavenger and/or light protection stabilizer has/have sterically hindered amines as functional groups.

5. Sensor membrane according to one of Claims 1 to 4, **characterized in that** the indicator is an oxygen-sensitive Ru, Os, Ir, Rh, Pd, Pt or Re transition metal complex.

6. Sensor membrane according to one of Claims 1 to 5, **characterized in that** the oxygen-sensitive indicator is Ru(II) tris(4,7-diphenyl-1,10-phenanthroline) dichloride.

7. Sensor membrane according to one of Claims 1 to 6, **characterized in that** the sensor membrane is applied to a support.

8. Sensor membrane according to Claim 7, **characterized in that** there is an adhesion promoter layer on the support.

9. Sensor membrane according to either of Claims 7 and 8, **characterized in that** the support is an adhesive film.

10. Sensor membrane according to one of Claims 7 to 9, **characterized in that** the sensor membrane can be used detached from the support, without the support.

11. Sensor membrane according to Claim 10, **characterized in that** the sensor membrane without support is coated with an adhesive film.

12. Sensor membrane according to one of Claims 1 to 11, **characterized in that** an oxygen-permeable layer is applied to one side of the sensor membrane.

13. Sensor membrane according to Claim 12, **characterized in that** the oxygen-permeable layer consists of a material which is optically non-transparent for the measurement and/or luminescent light.

14. Process for the preparation of a sensor membrane according to one of Claims 1 to 13, **characterized in that** the polymer-matrix formed predominantly from sulphur polymers, in which the sulphur is incorporated in the main chain in the form of sulphide or sulphone and the indicator are dissolved in a solvent and this solution is applied to a support and the solvent is then removed.

15. Process according to Claim 14, **characterized in that** chemical free-radical scavengers and/or light protection stabilizers are additionally added to the solution prepared from polymer matrix, indicator and solvent.

16. Process according to Claim 14 or 15, **characterized in that** the solution comprising polymer matrix and indicator is applied to the support by dropping, spraying, dip coating, dispensing, spin coating or imprinting.

17. Use of a sensor membrane according to one of Claims 1 to 16 for determining the oxygen concentration in liquid and gaseous media.

## Revendications

1. Membrane de détection pour déterminer des concentrations d'oxygène, dans laquelle une matrice polymère perméable à l'oxygène contient un indicateur dont les propriétés optiques et physico-chimiques peuvent être influencées par l'oxygène,
**caractérisée en ce que** la matrice polymère est essentiellement formée de polymères de soufre, dans lesquels le soufre est incorporé à la chaîne principale du polymère sous forme de sulfure ou de sulfone.

2. Membrane de détection selon la revendication 1,
**caractérisée en ce que** la matrice polymère est essentiellement composée d'un polymère, dans lequel du sulfure de diphényle et/ou une diphénylsulfone ou leurs dérivés est et/ou sont incorporés à la chaîne principale du polymère.

3. Membrane de détection selon la revendication 1 ou 2,
**caractérisée en ce que** la matrice polymère contient en outre au moins un capteur chimique de radicaux et/ou un stabilisateur protégeant de la lumière.

4. Membrane de détection selon la revendication 3,
**caractérisée en ce que** le ou les capteur(s) de radicaux et/ou le ou les stabilisateur(s) protégeant de la lumière présente(nt) comme groupement fonctionnel des amines à encombrement stérique.

5. Membrane de détection selon l'une quelconque des revendications 1 à 4,
**caractérisée en ce que** l'indicateur est un complexe de métal de transition, sensible à l'oxygène, de Ru, Os, Ir, Rh, Pd, Pt ou Re.

6. Membrane de détection selon l'une quelconque des revendications 1 à 5,
**caractérisée en ce que** l'indicateur sensible à l'oxygène est le dichlorure de Ru-(II)-tris-(4,7-diphényl-1,10-phénantroline).

7. Membrane de détection selon l'une quelconque des revendications 1 à 6,
**caractérisée en ce que** la membrane de détection est appliquée sur un support.

8. Membrane de détection selon la revendication 7,
**caractérisée en ce qu'**une couche d'agent adhésif est présente sur le support.

9. Membrane de détection selon l'une quelconque des revendications 7 et 8,
**caractérisée en ce que** le support est un film adhésif.

10. Membrane de détection selon l'une quelconque des revendications 7 à 9,
**caractérisée en ce que** la membrane de détection séparée du support est utilisable sans support.

11. Membrane de détection selon la revendication 10,
**caractérisée en ce que** la membrane de détection sans support est revêtue d'un film adhésif.

12. Membrane de détection selon l'une quelconque des revendications 1 à 11,
**caractérisée en ce que**, sur une face de la membrane de détection, on applique une couche perméable à l'oxygène.

13. Membrane de détection selon la revendication 12,
**caractérisée en ce que** la couche perméable à l'oxygène se compose d'un matériau optiquement non transparent pour la lumière de mesure et/ou la lumière de luminescence.

14. Procédé pour la fabrication d'une membrane de détection selon l'une quelconque des revendications 1 à 13,
**caractérisé en ce que** la matrice polymère formée essentiellement de polymères de soufre, dans laquelle le soufre est incorporé à la chaîne principale sous la forme d'un sulfure ou d'une sulfone, et l'indicateur sont dissous dans un solvant et cette solution est appliquée sur un support et, enfin, le solvant est éliminé.

15. Procédé selon la revendication 14,
**caractérisé en ce que** l'on ajoute encore à la solution fabriquée à partir de la matrice polymère, de l'indicateur et du solvant, des capteurs de radicaux chimiques et/ou des stabilisateurs protégeant de lumière.

16. Procédé selon la revendication 14 ou 15,
**caractérisé en ce que** la solution de matrice polymère et d'indicateur est déposée sur le support par application en goutte, par pulvérisation, par trempage, par distribution, par revêtement par rotation ou par impression.

17. Utilisation d'une membrane de détection selon l'une quelconque des revendications 1 à 16 pour la détermination de la concentration en oxygène dans des milieux liquides et gazeux.
